# EUROPEAN PATENT APPLICATION

(11) **EP 2 881 080 A1**
(43) Date of publication of application: **10.06.2015**
(21) Application number: 13195654.2
(22) Date of filing: 04.12.2013
(51) Int. Cl.: A61C 17/22

(54) **A toothbrush handle part of an electric toothbrush**

(71) Applicant: Braun GmbH, 61476 Kronberg (DE)
(72) Inventor: Kreßner, Gerhard, 63674 Altenstadt (DE)
(74) Representative: Töpert, Verena Clarita

(57) **Abstract**

A toothbrush handle part of an electric toothbrush has a handle part neck connectable to an attachment, at least one drive element for driving the attachment, said drive element being supported movably relative to said handle part neck, and a retarding element for retarding and/or locking and/or blocking and/or slowing down the drive element. The retarding element is movable relative to said drive element from a retarding position preventing movement of said drive element to an unretarding position allowing free movement of said drive element. The retarding element is accommodated between the handle part neck and the drive element to be slidable along said drive element in the longitudinal direction thereof from said retarding position in which said retarding element is in engagement with both the drive element and the handle part neck, to said unretarding position in which the retarding element is in engagement with not more than one of the drive element and the handle part neck.

## Description

### FIELD OF THE INVENTION

The present disclosure is concerned with a toothbrush which may be electrically powered. The present disclosure is further concerned with a toothbrush handle part of such a toothbrush, comprising a handle part neck connectable to an attachment such as a brush, at least one drive element for driving the attachment, said drive element being supported movably relative to said handle part neck, and a retarding element for retarding, locking, blocking and/or slowing down the drive element, said retarding element being movable relative to said drive element from a retarding position preventing movement of said drive element to an unretarding position allowing free movement of said drive element.

### BACKGROUND OF THE INVENTION

Electric toothbrushes often have a removable attachment in terms of a refill to be connected to the handle part of the toothbrush. To connect the attachment to the handle part, the attachment is often put onto a conically shaped handle part neck holding the attachment in frictional and/or form-fitting engagement therewith. To disconnect the attachment from the handle part, the attachment can be pulled away from the neck portion of the handle part in the longitudinal direction thereof.

In order to avoid unintentional operation of the drive unit of the handle part, e.g. when transporting the toothbrush in a bag where the on/off switch may be pushed unintentionally, it has been suggested to provide a locker for locking the drive unit of the toothbrush when the attachment is disconnected from the handle part. Such locking devices may have various embodiments. For example, electronic locking systems have been suggested to electronically determine whether the attachment brush is placed onto the handle part or disconnected therefrom. Such electronic systems use transponders provided on the attachment or other signaling means such as magnetic coils or optical detectors. Such electronic locking systems require electronic equipment and associated wiring. Furthermore, the signaling and transfer of signals may be disturbed, thereby causing malfunction.

Furthermore, mechanical retarding or locking systems have been suggested to lock the drive element which is movable relative to the handle part neck, in a mechanical way. For example, a handle part with a handle part neck consisting of two parts, one of them being movable such that the drive element positioned between the said two neck parts can be clamped there between. More particularly, the movable neck portion is supported by means of parallelogram links or groove-shaped guiding means to achieve outwardly directed expansion of the movable neck part when said neck part is pushed in the longitudinal direction when mounting or demounting the attachment to or from the handle part. Such radial expansion of the movable neck part is, however, rather complicated in terms of the support of the movable neck part, said support requiring pivotably attached links or curved elongated guiding grooves.

It is therefore an objective of the present invention to provide an improved toothbrush and an improved handle part thereof that avoid disadvantages of the prior art and further develops the prior art. In particular, it would be desirable to reliably prevent the drive of the toothbrush handle part from unintentional operation in a simple manner.

### SUMMARY OF THE INVENTION

In accordance with one aspect, a toothbrush handle part of an electric toothbrush is provided that comprises a handle part neck connectable to an attachment such as a brush, at least one drive element for driving the attachment, said drive element being supported movably relative to said handle part neck, and a retarding element for retarding and/or locking and/or blocking and/or slowing down the drive element. The retarding element is movable relative to said drive element from a retarding position preventing movement of said drive element to an unretarding position allowing free movement of said drive element. Said retarding element is accommodated between the handle part neck and said drive element to be slidable along said drive element in the longitudinal direction thereof from said retarding position in which said retarding element is in engagement with both the drive element and the handle part neck, to said unretarding position in which the retarding element is in engagement with not more than one of the drive element and the handle part neck.

In accordance with one aspect, an attachment of a toothbrush is provided that comprises an attachment neck connectable to a toothbrush handle part. The attachment neck includes an inner circumferential surface form-fitting to the outer circumferential surface of the handle part neck. A pusher projects inside said attachment neck in the longitudinal direction thereof to engage with and push the retarding element of the toothbrush handle part in the longitudinal direction thereof when putting the attachment neck onto the handle part neck.

In accordance with one aspect, a toothbrush is provided that comprises such toothbrush handle part and/or such attachment.

### BRIEF DESCRIPTION OF THE DRAWINGS

The invention is described in more detail below with reference to embodiments and figures, wherein:
Fig. 1 shows a longitudinal, sectional partial view of an example embodiment of an electric toothbrush showing the attachment brush thereof and, in a simplified illustration, the handle part thereof;
Fig. 2 shows an enlarged sectional view of the detail A in Fig. 1 showing the coupling section of the toothbrush between the attachment and a first example embodiment of a handle part, wherein the attachment is shown in the coupled configuration with the drive element in freely movable condition;
Fig. 3 shows an enlarged sectional view of detail A in Fig. 1 similar to Fig. 1, wherein the attachment is removed from the handle part and the retarding element is shown in the retarding position blocking movement of the drive element; and
Fig. 4 shows a sectional view of detail A of Fig. 1 showing a second embodiment of a handle part where the drive element has a tapered, conical portion to disengage from the retarding element when the retarding element is urged into its unretarding position.

### DETAILED DESCRIPTION OF THE INVENTION

According to the present disclosure, a toothbrush handle part of an electric toothbrush comprises a handle part neck connectable to an attachment such as a brush, at least one drive element for driving the attachment. The drive element is supported movably relative to the handle part neck. Unintentional operation of the drive of the handle part can be prevented by a retarding element that is accommodated between the handle part neck and the drive element to be slidable along said drive element in the longitudinal direction thereof. The retarding element is adapted for retarding, locking, blocking and/or slowing down the drive element and is movable from a retarding position to an unretarding position and/or vice versa. In the retarding position the retarding element is in engagement with both the drive element and the handle part neck, and in the unretarding position, the retarding element is in engagement with only one of the said drive element and the handle part neck.

The retarding element is accommodated between the handle part neck and the drive element to be slidable along the drive element in the longitudinal direction thereof from the retarding position in which the retarding element is in engagement with both, the drive element and the handle part neck, to the unretarding position in which the retarding element is in engagement with not more than one of the drive element and the handle part neck. In other words, in the unredarding position, the retarding element is either in engagement with the drive element or with the handle part neck.

In some embodiments, the retarding element may be movable along one axis only, wherein said axis may extend substantially in parallel with the longitudinal extension of the drive element. Thus, the retarding element may be moved from the retarding position to the unretarding position and/or vice versa only by means of an axial movement which may be in parallel with the longitudinal extension of the drive element. In addition, the retarding element may have a rotatory degree of freedom, e.g. it may rotate together with the drive element or, e.g. when the retarding element is in the unretarding position, it may rotate relative to the drive element. In some embodiments, the retarding element may have one degree of freedom only, wherein such degree of freedom may allow for axial movement of the retarding element along the drive element in the longitudinal extension thereof.

Movability of the retarding element in the direction substantially parallel to the longitudinal extension of the handle part may allow for easy operation of the retarding element. For example, the retarding element may be moved from the retarding position to the unretarding position by the attachment when the attachment is put onto the toothbrush handle part. The retarding element may have a driving or catching portion that can be positioned and/or adapted to be engaged by a driving or catching portion of the attachment when said attachment is put onto the handle part neck. For example, the attachment may be provided with a pusher portion that may directly engage with a portion of the retarding element and pushes the retarding element into the unretarding position when the attachment is put onto the handle part neck and reaches its predetermined connected position.

In some embodiments, the drive element and/or the retarding element may be provided with guiding means for slidably guiding the retarding element along the drive element. In some embodiments, the retarding element may include a ring slidably received on said drive element. The ring may be supported directly on the drive element in a slidable fashion, thereby achieving simple support structure. Such ring structure does not need to have a closed ring shape, but may be a slotted ring. Furthermore, the retarding element may have other configurations such as a slider segment slidably received in between the handle part neck and the drive element.

To achieve automatic retarding of the drive element when connecting and disconnecting respectively the attachment to and from the handle part, the retarding element may be biased towards its retarding position by corresponding biasing means applying a sufficient biasing force onto the retarding element to force the retarding element into its retarding position when no attachment is mounted on the handle part. For example, such biasing means may include a spring element applying a spring force to the retarding element towards the retarding position thereof. Such spring element may have different structures. In some embodiments, the spring device may include a coil-shaped or screw-type spring element surrounding the drive element, wherein said drive element may provide for support of the spring element. For example, a radially extending flange or a step-shaped recess may be provided on the drive element against which the spring element may be axially held. On the other hand, the spring element may be connected to the movable retarding element to move said retarding element into the retarding position.

The biasing force may be sufficiently large so as to achieve movement of the retarding element into the retarding position when no attachment is mounted to the handle part. On the other hand, the said biasing force may be small enough to be overcome by usual mounting forces applied to the attachment when putting the attachment onto the handle part. Furthermore, the biasing force may be smaller than the coupling force holding the attachment on the handle part.

In some embodiments, the retarding element may be provided with first and second form-fitting engagement surfaces, wherein a first engagement surface may be form-fitting with a surface portion of the handle part neck and a second engagement surface may be form-fitting with a portion of the drive element. The form-fitting engagement surfaces may have different configurations, for example flattened engagement surfaces on the retarding element and the handle part neck and drive element to be engaged with each other to prevent unintentional movement of the drive element.

Additionally or alternatively, the retarding element may be provided with an engagement surface frictionally engaging with a corresponding surface portion of the handle part and a frictional engagement surface frictionally engaging with a portion of the drive element.

The engagement surfaces may be provided on different portions of the retarding element and the handle part neck and the drive element. In some embodiments, the engagement surfaces may be located on peripheral sides of the retarding element and/or the handle part neck and/or the drive element. For example, when the retarding element is ring-shaped, the engagement surfaces may be provided on the outer periphery and the inner periphery of the ring to engage with peripheral sides of the handle part neck and drive element.

Alternatively or additionally, the retarding element may be provided with one of the aforementioned engagement surfaces at a front face side to engage with surfaces of the handle part neck and/or the drive element extending substantially crosswise with respect to the longitudinal direction of the handle part and/or the longitudinal direction of the drive element. For example, the handle part neck may have a flange portion projecting inwardly or outwardly to be engageable with the front face of the retarding element. Additionally or alternatively, the drive element may have a recess diameter portion or a shoulder providing for a surface extending substantially in radial direction relative to the longitudinal extension of the drive element, such radially extending surface being engageable with a front face of the retarding element.

In some embodiments, the retarding element may be received inside the handle part neck in an interior space between the inner side of the handle part neck and the drive element. Additionally, the retarding element may surround the drive element. For example, the retarding element may be received within a ring-shaped gap between the interior surface of the handle part neck and the outer surface of the drive element, wherein the retarding element may be movable along the drive element in such interior space.

The retarding element may engage with the outer periphery/circumference of the drive element and with the inner periphery/circumference of the handle part neck and/or in the retarding position, the retarding element may be rigidly connecting the inner circumference of the handle part neck to the outer circumference of the drive element. In an alternative, the retarding element may have an external portion engaging with the outer periphery or the outer surface of the handle part neck. For example, the retarding element may be formed as a cup-shaped sleeve surrounding a portion of the handle part neck and/or slidable along the outer surface of the handle part neck. However, when positioning the retarding element inside the handle part neck, the retarding element may be substantially protected against dust or other elements of the surroundings detrimental to movability of the retarding element.

To achieve secure locking or blocking of the drive element in the retarding position, the drive element may be provided with stopper means for limiting the axial movability of the retarding element along the drive element. Alternatively, the drive element may be provided with a recessed diameter portion on which the retarding element may be slidably mounted. The retarding element may have a mounting recess receiving the reduced diameter portion of the drive element. The mounting recess may have a diameter larger than the recess diameter portion of the drive element and smaller than the diameter of neighbouring portions of the drive element neighbouring the aforementioned reduced diameter portion thereof. For example, the handle part neck may have an inner circumferential side having different diameter portions at different axial positions with a smaller diameter portion being engageable with the retarding element when said retarding element is in the retarding position, and a larger diameter portion being associated with the axially spaced unretarding position so that the retarding element is out of engagement from the inner circumferential surface of the handle part neck when it is in the unretarding position. Such different diameter portions can be provided in terms of a stepped configuration of the inner circumferential side of the handle part neck. Additionally or alternatively, the inner circumferential surface of the handle part neck may have a continuous configuration smoothly transforming from the smaller diameter portion to the larger diameter portion.

In some embodiments, the handle part neck may have a tapered, for example conical contour to be engaged with the retarding element. Said retarding element also may have a tapered, for example conical engagement surface to be engaged with the corresponding circumferential surface of the handle part neck.

Alternatively or additionally, the drive element may have such different diameter portions at different axial positions so that depending on the axial position of the retarding element, there may be engagement or non-engagement of the retarding portion with the drive element. The drive element may have a tapered, for example conical contour, for example on the outer circumferential surface so that the retarding element may engage the outer circumferential surface of the drive element or may not engage with the outer circumferential surface of the drive element, depending on the axial position of the retarding element. The retarding element may be provided with a corresponding tapered, for example conical inner circumferential surface to be engaged with the drive element.

In case the drive element is a rotatorily movable element, the engagement surfaces of the retarding element may have a non-circular shape. For instance, the engagement surfaces may have a flattened contour providing for rotatory locking of the drive element. For example, the retarding element may have flattened portions on the inner and/or outer peripheral surfaces of the retarding element to be in rotatory locking engagement with the peripheral surface of the handle part neck and/or the circumferential surface of the drive element. For example, the retarding element may form a sleeve slidably received on the drive element having a spline shaft or polygonal shaft configuration allowing for axial sliding of the sleeve on the shaft, but preventing the sleeve from rotating relative to the shaft.

Alternatively or additionally, the retarding element may prevent the drive element from movement by means of frictional engagement. For example, the conical engagement surface of the retarding element may be press-fitted with the conical engagement surface of the handle part neck when axially moving the retarding element in its retarding position. Depending on the slope or angle of inclination of the conical structure, sufficient frictional forces may be effected by rather limited biasing forces applied to the retarding element and urging the retarding element into the retarding position. The conical engagement structure of the handle part neck and/or the retarding element may be tapered at angles of 2 x 1°-10°, particularly 2 x 2°-7°.

In some embodiments, the retarding position of the retarding element may be closer to an end portion of the handle part neck than the unretarding position of the retarding element which may be further away from the end portion of the handle part neck towards a gripping section of the handle part.

In order to not only prevent the drive element from unintentional movement, but also prevent unintentional energy/power consumption, the handle part may be provided with a control unit for controlling the drive unit, said control unit being adapted to switch off the energy supply to the drive unit when the retarding element is in its retarding position. Detection of the position of the retarding element may be effected by respective position sensor means. Additionally or alternatively, the control unit may be provided with detection means for detecting power consumption and/or detection means for detecting movement of the drive element or any other element of the drive unit. If it is detected that power consumption is above a certain threshold value and/or that there is no movement of the drive element, the control unit may switch off energy supply.

An attachment, such as a brush to be attached to the electric toothbrush may comprise an attachment neck connectable to the toothbrush handle part as described above. The attachment neck may include an inner circumferential surface form-fitting to the outer circumferential surface of the handle part neck. A pusher may project inside said attachment neck in the longitudinal direction thereof to engage with and push the retarding element of the toothbrush handle part in the longitudinal direction thereof when putting the attachment neck onto the handle part neck.

In some embodiments, the pusher may include a hollow, sleeve-like element having an inner recess for receiving the drive element of the toothbrush handle part.

The electric toothbrush may comprise a toothbrush handle part and/or an attachment according to any of the embodiments discussed above.

The following is a non-limiting discussion of example embodiments of an electrical toothbrush and parts thereof in accordance with the present disclosure, where reference to the Figures is made.

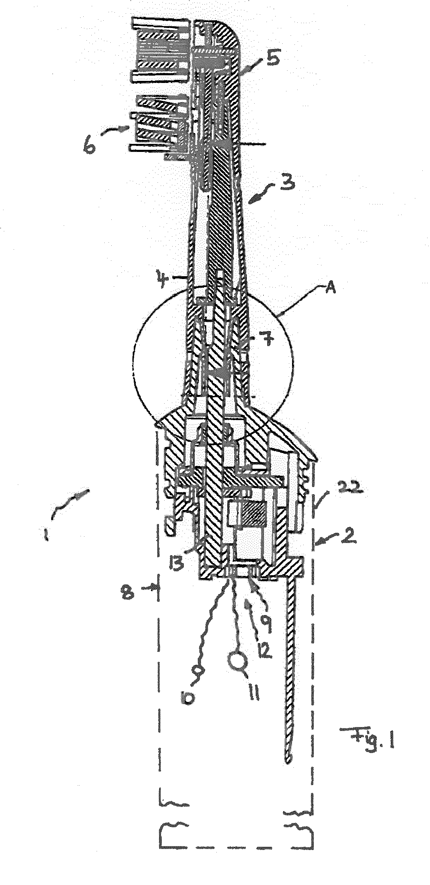

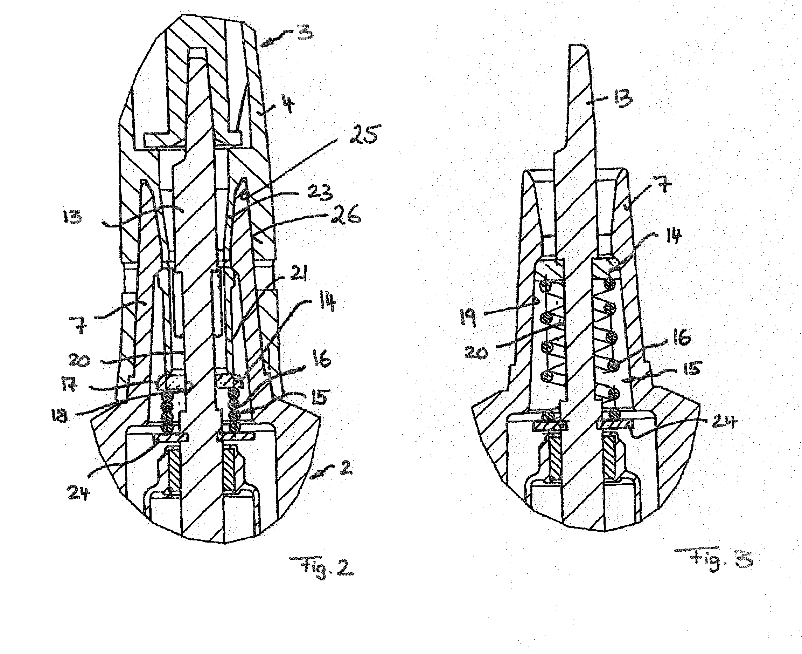

As shown by Fig. 1, a toothbrush 1 comprises a toothbrush handle part 2 and an attachment 3 connected thereto in the form of a brush attachment. The handle part 2 which is shown in part in detail and in part in simplified manner in Figs. 2 and 3, may comprise a housing 22 in which a drive unit 9 including a motor and a power supply means, e.g. in the form of a rechargeable battery, may be received and on which an actuation switch may be provided for switching the drive unit 9 on and off. On the front end of the handle part 2, the housing 22 or an element attached thereto, may form a handle part neck 7 that - viewed as a whole - may be designed in the form of a frontally projecting frustum-shaped and essentially cylindrical connecting piece that can optionally taper slightly toward its free end. The outer surface of said frustum-shaped connecting piece may have a conical shape, cf. Fig. 2. Furthermore, at a front end section, said handle part neck 7 may also include on its inner circumferential surface a slightly tapered contour becoming larger in diameter towards the open end, cf. Fig. 2. Thus, the end portion of the handle part neck 7 may include tapered surfaces on its inner and outer surfaces.

The handle part neck 7 may be hollow and may include a central through-hole through which a drive element 13 extends that may be operationally connected to the drive unit 9 and the motor thereof. The drive element 13 may execute different movements such as pivoting movement or rotatory movement or, depending on the drive system, other movements. The drive element 13 may form a rotatory shaft that may be rotatably supported in the handle part 2 to rotate in an oscillating manner about an axis that may be substantially parallel to the longitudinal extension of the handle part 2.

The attachment 3 may comprise an operating head 5 provided with teeth-cleaning tools which may comprise a bristle field 6 as shown in Fig. 1. The operating or brush head 5 may be connected to an attachment neck 4, e.g. an elongated hollow neck that can be connected to the handle part neck 7. As shown by Fig. 2, the neck 4 of the attachment 3 may include a connecting portion at its end substantially complementary to the connecting piece of the handle part neck 7. It may include a coupling recess providing for an inner circumferential surface 25 that may be slightly tapered, for example conical to match the outer circumferential surface 26 of the handle part neck 7. Alternatively or in addition, the connecting section of the neck 4 of the attachment 3 may further include an inner projection 23 which may have a sleeve-like form with a diameter smaller than the neck portion to be put onto the outer surface of the handle part neck. Said inner projection 23 may include a tapered configuration, for example a conical shape to match the inner surface of the handle part neck 7, cf. Fig. 1 and 2.

The attachment 3 can be connected to the drive unit 9, for example to the drive element 13 to transmit the drive movement to the brush head 5 and the bristle field 6.

As shown by Figures 2 and 3, the handle part 2 includes a retarding element 14 for retarding and locking, resp., the drive element 13 mechanically, when the attachment 3 is removed from the handle part 2. The retarding element 14 may be operated, i.e. moved from its retarding position to its unretarding position and vice versa automatically by the attachment 3 when the attachment 3 is connected to the handle part 2 and disconnected therefrom.

As shown by Figures 2 and 3, the retarding element 14 may be accommodated between the handle part neck 7 and the drive element 13. For example, the retarding element 14 may be received inside the handle part neck 7 in an interior space thereof surrounding the drive element 13. The retarding element 14 may include a ring or may have a ring shape and may be slidably received on the shaft-like drive element 13 to be slidable along said drive element 13 in the longitudinal direction thereof.

The retarding element 14 may include a first engagement surface 17 provided on the outer circumferential surface of the ring-shaped retarding element 14, said first engagement surface 17 may be shaped to form-fit with a section of the inner circumferential surface of the handle part neck 7 forming a complementary engagement surface 19. On the other hand, the retarding element 14 may include a second engagement surface 18 on its inner peripheral surface to form-fit with the outer circumferential surface, i.e. with an engagement surface 20 of the drive element 13 to allow sliding movement along the drive element 13.

As shown by Figures 2 and 3, the retarding element 14 can be moved between two positions, i.e. the retarding position shown in Fig. 3 and the unretarding position shown in Fig. 2. In the retarding position 3, the retarding element 14 may be closer to the free end 27 of the handle part neck 7, whereas in the unretarding position, the retarding element 14 may be further away from said free end 27 of the handle part neck 7 and deeper inside the handle part 2. Movement of the retarding element 14 can be effected by means of the attachment 3 which ma be provided with a pusher 21 to push the retarding element 14 into its unretarding position when the attachment 3 is connected to the handle part 2. The pusher 21 may project inside the attachment neck 4 in the longitudinal direction thereof to engage and push the retarding element 14. The pusher 21 may be formed by an extension of the aforementioned inner projection 23 of the neck 4 of the attachment 3. Said pusher 21 may form a hollow sleeve having an inner recess that may receive the drive element 13 to slide along said drive element 13 when putting the attachment 3 onto the handle part 2. The pusher 21 may be adapted in its diameter and/or position and/or dimension such that it gets into engagement with the retarding element 14 to push the retarding element 14 deeper into the handle part 2 toward its unretarding position shown in Fig. 2.

When the attachment 3 is disconnected and removed from the handle part 2, biasing means 15 which may include a spring element 16 may urge the retarding element 14 back into its retarding position shown in Fig. 3. The spring element 16 may be formed as a screw-type spring received on the drive element 13. At its one end, the spring element 16 may be supported by a support element 24 that may be provided on the drive element 13. Said support element 24 may be formed as a ring-shaped plate or flange that may be axially fixed on said drive element 13. Alternatively, the support element 24 may be formed by a shoulder of said drive element 13. Furthermore, the spring element 16 may also be attached to or formed by a portion of the handle part 2. The support element 24 may provide for axial support of the spring element 16 so that the spring element 16 may apply axial forces to said support element 24 substantially in the longitudinal extension of the handle part 2.

On the other side, the spring element 16 may be connected to the retarding element 14. The spring element 16 may press onto a front face of the retarding element 14 to urge the retarding element 14 away from the support element 24 towards the retarding position.

As shown by Fig. 3, the inner circumferential surface of the handle part neck 7 may have a tapered configuration with the diameter of said inner circumferential surface becoming smaller towards the retarding position close to the free end 27 of the handle part neck 7. As shown by Fig. 2, the diameter of the inner circumferential surface of the handle part neck 7 forming the engagement surface 19 may increase towards the unretarding position, wherein at least in the unretarding position the diameter of the inner circumferential surface of the handle part neck 7 may be large enough to allow disengagement of the retarding element 14 from said engagement surface 17 so that the retarding element 14 is no longer locked, but may move, thereby allowing movement of the drive element 13. On the other hand, the diameter of the tapered portion of the handle part neck 7 on the inner circumferential surface thereof may substantially correspond to the outer circumferential surface and the diameter thereof of the retarding element 14 at the outer end of the engagement surface 17, cf. Fig. 3 so that the retarding element 14 may be held and locked.

As shown by Fig. 3, the drive element 13 may have a substantially cylindrical engagement surface 20 staying in engagement with the retarding element 14 irrespective of the position thereof.

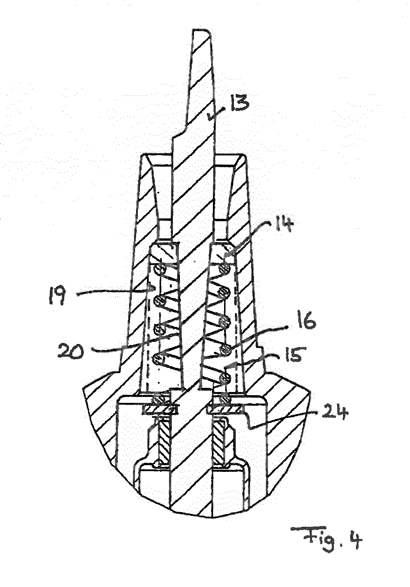

Alternatively, as shown by Fig. 4, the engagement surface 20 of the drive element 13 may have a tapered, for example conical configuration with the diameter of the engagement surface 20 increasing towards the retarding position and decreasing towards the opposite direction, i.e. towards the inside of handle part 2. Consequently, when the retarding element 14 is pushed into its unretarding position shown in Fig. 2, the retarding element 14 may disengage from the drive element 13, thereby allowing for movement of the drive element 13.

The inner circumferential surface of the handle part neck 7 forming the engagement surface 19 may have the same configuration as in Fig. 3, i.e. a tapered shape. Alternatively, as shown by the dashed lines in Fig. 4, the engagement surface 19 may have a substantially cylindrical shape staying in engagement with the retarding element 14 irrespective of the position thereof. As the embodiment of Fig. 4 allows for disengagement of the retarding element 14 from the drive element 13, the retarding element 14 may be kept in engagement with the handle part neck 7.

When the drive element 13 is locked by the retarding element 14, a control unit 11 may switch off powering of the drive unit 9. For example, control unit 11 may include a detector for detecting power consumption of the motor and/or a detector for detecting movement of the drive element 13 and/or a detector for detecting the position of the retarding element 14 or any other element of the drive unit 9. If said detectors of the control unit 11 detect power consumption to exceed a threshold value and/or detect that the drive element 13 does not move, the powering may be switched off by the control unit 11 to avoid unintentional operation of the hand piece.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A toothbrush handle part (2) of an electric toothbrush (1), comprising a handle part neck (7) connectable to an attachment (3), at least one drive element (13) for driving the attachment (3), said drive element (13) being supported movably relative to said handle part neck (7), and a retarding element (14) for retarding and/or locking and/or blocking and/or slowing down the drive element (13), said retarding element (14) being movable relative to said drive element (13) from a retarding position preventing movement of said drive element (13) to an unretarding position allowing free movement of said drive element (13), **characterized in that** said retarding element (14) is accommodated between the handle part neck (7) and said drive element (13) to be slidable along said drive element (13) in the longitudinal direction thereof from said retarding position in which said retarding element (14) is in engagement with both the drive element (13) and the handle part neck (7), to said unretarding position in which the retarding element (14) is in engagement with not more than one of the drive element (13) and the handle part neck (7).

2. The toothbrush handle part (2) according to claim l, wherein said retarding element (14) includes a ring slidably received on said drive element (13).

3. The toothbrush handle part (2) of anyone of the preceding claims, wherein the retarding element (14) is received inside the handle part neck (7) in an interior space thereof surrounding the drive element (13).

4. The toothbrush handle part (2) of anyone of the preceding claims, wherein biasing means (15) are provided for biasing the retarding element (14) towards the retarding position thereof, wherein said biasing means (15) is adapted to provide a biasing force onto said retarding element (14) sufficiently large to move the retarding element (14) into the retarding position when the retarding element (14) is unobstructed by any attachment, and is smaller than the holding force holding the attachment (3) on the handle part neck (7).

5. The toothbrush handle part (2) of claim 4, wherein said biasing means (15) include a spring element (16), said spring element (16) being connected to the retarding element (14) on the one hand and being connected to the drive element (13) and/or the handle part (2) on the other hand.

6. The toothbrush handle part (2) according to anyone of the preceding claims, wherein the retarding element (14) is provided with a first engagement surface (17) form-fitting with an engagement surface (19) of the handle part neck (7) and a second engagement surface (18) form-fitting with an engagement surface (20) of the drive element (13).

7. The toothbrush handle part (2) of anyone of the preceding claims, wherein in said retarding position, the retarding element (13) is engaging with the inner circumference of the handle part neck (7) and the outer circumference of the drive element (13), and/or in said retarding position, the retarding element (13) is rigidly connecting the inner circumference of the handle part neck (7) to the outer circumference of the drive element (13).

8. The toothbrush handle part (2) according to anyone of the preceding claims, wherein the handle part neck (7) has an inner circumference having different diameter portions at different axial sections of the handle part neck (7) with a smaller diameter portion being associated with the retarding position of the retarding element (14) and a larger diameter portion being associated with the unretarding position of the retarding element (14).

9. The toothbrush handle part (2) according to anyone of the preceding claims, wherein the handle part neck (7) has a tapered contour to be engaged by the retarding element (14) and/or the retarding element (13) has a tapered contour to be engaged by the handle part neck (7).

10. The toothbrush handle part (2) according to anyone of the preceding claims, wherein the drive element (13) and/or the retarding element (14) are provided with guiding means for slidably guiding the retarding element (14) along the drive element.

11. The toothbrush handle part (2) of anyone of the preceding claims, wherein the drive element (13) is provided with stopper means for limiting the axial movability of the retarding element (14) along the drive element (13) and/or wherein the drive element (13) is provided with a recessed diameter portion on which the retarding element (14) is slidably mounted, said retarding element (14) having a mounting recess receiving said reduced diameter portion of the drive element, said mounting recess having a diameter larger than the recess diameter portion of the drive element and smaller than the diameter of neighbouring portions of the drive element (13) neighbouring the aforementioned reduced diameter portion thereof.

12. The toothbrush handle part (2) according to anyone of the preceding claims, wherein a control unit (11) provided for switching off the power supply to the drive unit (9), said control unit (11) being provided with a detector for detecting the position of the retarding element (14) and/or a detector for detecting power consumption of the drive unit exceeding a certain threshold value and/or a detector for detecting whether the drive element (13) is moving or not.

13. An attachment (3) of a toothbrush (1), the attachment (3) comprising an attachment neck (4) connectable to a toothbrush handle part of anyone of the preceding claims, said attachment neck (4) including an inner circumferential surface (25) form-fitting to the outer circumferential surface (26) of the handle part neck (7), **characterized by** a pusher (21) projecting inside said attachment neck (4) in the longitudinal direction thereof to engage with and push the retarding element (14) of the toothbrush handle part (2) in the longitudinal direction thereof when putting the attachment neck (4) onto the handle part neck (7).

14. The attachment (3) according to claim 13, wherein said pusher (21) includes a hollow, sleeve-like element having an inner recess for receiving the drive element (13) of the toothbrush handle part (2).

15. A toothbrush (1) comprising a toothbrush handle part (2) according to anyone of claims 1 to 12 and/or an attachment (3) according to anyone of claims 13 to 14.
